(19) Europäisches Patentamt
European Patent Office
Office européen des brevets

(11) **EP 3 905 811 B1**

(12) **EUROPEAN PATENT SPECIFICATION**

(45) Date of publication and mention of the grant of the patent:
**05.07.2023 Bulletin 2023/27**

(21) Application number: **19906468.4**

(22) Date of filing: **24.12.2019**

(51) International Patent Classification (IPC):
**H04L 5/00** *(2006.01)*          **H04W 72/1268** *(2023.01)*

(52) Cooperative Patent Classification (CPC):
**H04L 5/0053; H04L 5/0055; H04L 5/0057; H04W 72/1268**

(86) International application number:
**PCT/CN2019/127850**

(87) International publication number:
**WO 2020/135403 (02.07.2020 Gazette 2020/27)**

(54) **METHOD FOR DYNAMICALLY ADJUSTING PUSCH RESOURCE, DEVICE, APPARATUS AND COMPUTER-READABLE STORAGE MEDIUM**

VERFAHREN ZUR DYNAMISCHEN EINSTELLUNG EINER PUSCH-RESSOURCE, VORRICHTUNG, GERÄT UND COMPUTERLESBARES SPEICHERMEDIUM

PROCÉDÉ D'AJUSTEMENT DYNAMIQUE D'UNE RESSOURCE PUSCH, DISPOSITIF, APPAREIL ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2018   CN 201811611190**

(43) Date of publication of application:
**03.11.2021   Bulletin 2021/44**

(73) Proprietor: **ZTE Corporation**
**Shenzhen, Guangdong 518057 (CN)**

(72) Inventor: **TANG, Feng**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(56) References cited:
- **CATT: "Remaining details of UCI multiplexing on PUSCH", 3GPP DRAFT; R1-1801733, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 February 2018 (2018-02-17), pages 1-5, XP051397714, Retrieved from the Internet: URL:http://www.3gpp.org/ftp/tsg%5Fran/WG1%5FRL1/TSGR1%5F92/Docs/ [retrieved on 2018-02-17]**
- **HUAWEI ET AL: "UCI piggyback on PUSCH", 3GPP DRAFT; R1-1800833, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Vancouver, Canada; 20170122 - 20170126 13 January 2018 (2018-01-13), XP051385105, Retrieved from the Internet: URL:http://www.3gpp.org/ftp/tsg%5Fran/WG1%5FRL1/TSGR1%5FAH/NR%5FAH%5F1801/Docs/ [retrieved on 2018-01-13]**

- **"3rd Generation Partnership Project; Technical Specification Group Radio Access Network; NR; Multiplexing and channel coding (Release 15)", 3GPP DRAFT; DRAFT38212-F30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 September 2018 (2018-09-24), XP051515402, Retrieved from the Internet: URL:http://www.3gpp.org/ftp/tsg%5Fran/WG1% 5FRL1/DRAFT/Draft%5Fversions/Draft38212%2 D f30%2Ezip [retrieved on 2018-09-24]**

**Description**

**TECHNICAL FIELD**

Embodiments of the disclosure relate to, but are not limited to, a method, device, apparatus, and computer-readable storage medium for dynamically adjusting PUSCH (Physical Uplink Shared Channel) resource.

**BACKGROUND**

In 5G (5th-Generation wireless communication system), UCI (Uplink Control Information) includes CSI (Channel Status Information), HARQ (Hybrid Automatic Repeat reQuest) A/N (ACK/NACK), and SR (Scheduling reQuest) Information.

The CSI is an index for measuring the channel quality, and includes a plurality of parameters: channel measurement information such as CQI (Channel Quality Indicator), PMI (Precoding Matrix Indicator), RI (Rank Indicator), and RSRP (Reference Signal Receiving Power). According to the network status and configuration, the parameters are combined into CSI report in different forms, and the CSI comprises at least one of the parameters.

The CSI feedback is divided into three modes which include a periodic mode, a semi-static mode and an aperiodic mode. For the periodic CSI, a gNB (5G base station) configures PUCCH (Physical Uplink Control Channel) resources for sending the CSI in RRC (Radio Resource Control) signaling, and a UE (User Equipment) sends CSI information according to the PUCCH Resource configuration period.

The UCI may be carried over a PUCCH or PUSCH channel for transmission. When UCI is transmitted at a certain time, if PUSCH transmission overlapped with PUCCH channel symbols exists at the same time, CSI is multiplexed into the PUSCH channel and transmitted together.

When a large amount of UCI information is carried over the PUSCH channel, part of CSI in the UCI information may be discarded, resulting in an overdue CSI feedback and a loss of performance.

The document 3GPP R1-1801733: "Remaining details of UCI multiplexing on PUSCH", by CATT (3GPP TSG RAN WG1 Meeting #92, Athens, Greece, February 26th - March 2nd, 2018) relates to UCI resource computation.

**SUMMARY**

The invention is defined by the appended claims and provides a method, device, apparatus and computer-readable storage medium for dynamically adjusting PUSCH resources to avoid UCI being discarded.

As defined by claim 1, the invention provides a method for dynamically adjusting Physical Uplink Shared Channel, PUSCH, resource, comprising steps of: determining a scenario for transmitting Uplink Control Information, UCI, over a PUSCH, wherein the scenario includes at least one of: transmitting service data and UCI over the PUSCH, and transmitting only the UCI over the PUSCH; selecting, according to the scenario, a group of PUSCH resource parameters from a plurality of groups of PUSCH resource parameters that do not discard UCI to generate scheduling information; and sending the scheduling information to User Equipment, UE; wherein the step of selecting, according to the scenario, a group of PUSCH resource parameters from the plurality of groups of PUSCH resource parameters that do not discard UCI to generate scheduling information comprises: selecting the group of PUSCH resource parameters from the plurality of groups of PUSCH resource parameters according to a preset sequence; determining the number of Resource Elements, REs, required for transmitting the UCI according to the scenario and currently selected PUSCH resource parameter; and when it is determined, according to the number of REs and the scenario, that a preset condition that the UCI is not discarded is satisfied, generating the scheduling information according to the currently selected PUSCH resource parameter.

Preferred embodiments of the method of claim 1 are defined by claims 2 to 8.

As defined by claim 9, the invention provides a device for dynamically adjusting PUSCH resource, comprising: a determination module, configured to determine a scenario for transmitting Uplink Control Information, UCI, over a PUSCH, wherein the scenario includes at least one of: transmitting service data and UCI over the PUSCH, and transmitting only the UCI over the PUSCH; a selection module, configured to select, according to the scenario, a group of PUSCH resource parameters from a plurality of groups of PUSCH resource parameters that do not discard UCI to generate scheduling information; and a sending module, configured to send the scheduling information to a User Equipment, UE; wherein the selection module is configured to: select the group of PUSCH resource parameters from the plurality of groups of PUSCH resource parameters according to a preset sequence; determine the number of Resource Elements, Res, required for transmitting the UCI according to the scenario and currently selected PUSCH resource parameter; and when it is determined that a preset condition where the UCI is not discarded is satisfied according to the number of REs and the scenario, generate the scheduling information according to the currently selected PUSCH resource parameter.

As defined by claim 10, the invention provides an apparatus for dynamically adjusting PUSCH resource, comprising: a memory, a processor and a computer program stored in the memory and executable by the processor, wherein the processor implements the method for dynamically adjusting PUSCH resource according to any one of claims 1 to 8 when executing the computer program.

As defined by claim 11, the invention provides a computer-readable storage medium storing computer-executable instructions for carrying out the method of dynamically adjusting PUSCH resource of any one of claims 1 to 8.

## BRIEF DESCRIPTION OF THE DRAWINGS

FIG. 1 is a schematic diagram of network architecture according to an embodiment of the disclosure;
FIG. 2 is a flowchart of a method of dynamically adjusting PUSCH resource according to an embodiment of the disclosure;
FIG. 3 is a flowchart of a method of dynamically adjusting PUSCH resource according to another embodiment of the disclosure;
FIG. 4 is a flowchart of step 202 according to an embodiment of the present disclosure;
FIG. 5 is a flowchart of a method of dynamically adjusting PUSCH resource according to an embodiment of the present disclosure;
FIG. 6 is a block diagram of a device for dynamically adjusting PUSCH resource according to an embodiment of the disclosure; and
FIG. 7 is a block diagram of an apparatus for dynamically adjusting PUSCH resource according to an embodiment of the disclosure.

## DETAILED DESCRIPTION

Embodiments of the present disclosure will be described in detail below with reference to the accompanying drawings.

The steps illustrated in the flowcharts of the drawings may be performed in a computer system such as a group of computer-executable instructions. Also, while logical orders are shown in the flowchart, in some cases, the steps shown or described may be performed in orders different than here.

HARQ A/N and CSI in UCI information are independently encoded according to 3GPP (3rd Generation Partnership Project) 5G NR (New Radio) standard protocol. If CSI is divided into 2 parts, CSI Part1 (i.e., CSI-1) and CSI Part2 (i.e., CSI-2) are independently encoded.

For UCI multiplexing to PUSCH transmission, the resources used for UCI multiplexing to PUSCH transmission are determined by parameters $\beta_{offset}^{HARQ-ACK}$ (HARQ-ACK offset), $\beta_{offset}^{CSI-1}$ (CSI-1 offset), and $\beta_{offset}^{CSI-2}$ (CSI-2 offset).

When the ACK is borne on a PUSCH channel carrying UL-SCH (i.e., service data and UCI are transmitted over the PUSCH), the calculation formula of the number of occupied REs (Resource elements) is as follows:

$$Q'_{ACK} = \min\left\{ \left\lceil \frac{(O_{ACK}+L_{ACK})\cdot\beta_{offset}^{PUSCH}\cdot\sum_{l=0}^{N_{symbol}^{PUSCH}-1}M_{sc}^{UCI}(l)}{\sum_{r=0}^{C_{UL-SCH}-1}K_r} \right\rceil, \left\lceil a\cdot\sum_{l=0}^{N_{symbol}^{PUSCH}}M_{sc}^{UCI}(l) \right\rceil \right\}$$

When the ACK is borne on a PUSCH channel without carrying the UL-SCH (i.e., only UCI is transmitted over the PUSCH), the calculation formula of the number of occupied REs is as follows:

$$Q'_{ACK} = \min\left\{ \left\lceil \frac{(O_{ACK}+L_{ACK})\cdot\beta_{offset}^{PUSCH}}{R\cdot Q_m} \right\rceil, \left\lceil a\cdot\sum_{l=l_0}^{N_{symbol}^{PUSCH}-1}M_{sc}^{UCI}(l) \right\rceil \right\}$$

wherein:

$Q^{'}_{ACK}$ : the number of REs required for PUSCH channel to carry ACK;

$Q_{ACK}$ : the number of bits occupied by an ACK (i.e., HARQ A/N);

$L_{ACK}$: the number of CRC (Cyclic Redundancy Check) bits occupied by an ACK;

$$\beta^{PUSCH}_{offset} = \beta^{HARQ-ACK}_{offset}$$ ;

$C_{UL\text{-}SCH}$ : the number of Codeblocks (code blocks) for PUSCH transmission;

$K_r$: TBSize (Transport Block size) of Codeblock;

$M^{UCI}_{sc}(l)$ : the number of REs that the symbol $l$ in PUSCH can be used to transmit UCI;

$N^{PUSCH}_{Symbol}$ : a total number of symbols occupied by PUSCH;

$\alpha$ : a preset Scaling (Scaling value), which is usually configured by a higher layer;

$l_0$: among all symbols of the PUSCH, a first non-DMRS symbol after a DMRS (Demodulation Reference Signal) symbol;

$R$ : code rate of PUSCH; and

$Q_m$ : PUSCH Modulation Order.

When the CSI part1 is borne on a PUSCH channel carrying UL-SCH, the calculation formula of the number of occupied REs is as follows:

$$Q^{'}_{CSI-1} = \min\left\{ \left\lceil \frac{(O_{CSI-1}+L_{CSI-1})\cdot \beta^{PUSCH}_{offset} \cdot \sum\limits_{l=0}^{N^{PUSCH}_{symbol}-1} M^{UCI}_{sc}(l)}{\sum\limits_{r=0}^{C_{UL-SCH}-1} K_r} \right\rceil, \left\lceil a\cdot \sum\limits_{l=0}^{N^{PUSCH}_{symbol}} M^{UCI}_{sc}(l) \right\rceil - Q^{'}_{ACK} \right\}$$

When the CSI part1 is borne on a PUSCH channel without carrying UL-SCH, the calculation formula of the number of occupied REs is as follows:

if CSI part2 is present,

$$Q^{'}_{CSI-1} = \min\left\{ \left\lceil \frac{(O_{CSI-1}+L_{CSI-1})\cdot \beta^{PUSCH}_{offset}}{R\cdot Q_m} \right\rceil, \sum\limits_{l=0}^{N^{PUSCH}_{symbol}-1} M^{UCI}_{sc}(l) - Q^{'}_{ACK} \right\}$$ ;

otherwise,

$$Q^{'}_{CSI-1} = \sum\limits_{l=0}^{N^{PUSCH}_{symbol}-1} M^{UCI}_{sc}(l) - Q^{'}_{ACK}$$ ,

wherein:

$Q^{'}_{CSI-1}$ : the number of REs required for PUSCH to carry CSI Part1;

$O_{CSI-1}$: the number of bits occupied by CSI part1;

$$\beta^{PUSCH}_{offset} = \beta^{CSI-1}_{offset}$$ ;

$L_{CSI-1}$: the number of CRC check bits occupied by CSI part1;

$R$ : a code rate of PUSCH; and

$Q_m$ : PUSCH Modulation Order.

When the CSI part2 is borne on a PUSCH channel carrying UL-SCH, the calculation formula of the number of occupied REs is as follows:

$$Q'_{CSI-2} = \min\left\{\left\lceil \frac{(O_{CSI-2}+L_{CSI-2})\cdot\beta_{offset}^{PUSCH}\cdot\sum_{l=0}^{N_{symbol}^{PUSCH}-1}M_{sc}^{UCI}(l)}{\sum_{r=0}^{C_{UL-SCH}-1}K_r}\right\rceil, \left\lceil\alpha\cdot\sum_{l=0}^{N_{symbol}^{PUSCH}}M_{sc}^{UCI}(l)\right\rceil - Q'_{ACK} - Q'_{CSI-1}\right\}$$

When the CSI part2 is borne on a PUSCH channel without carrying UL-SCH, the calculation formula of the number of occupied REs is as follows:

$$Q'_{CSI-2} = \sum_{l=0}^{N_{symbol}^{PUSCH}-1}M_{sc}^{UCI}(l) - Q'_{ACK} - Q'_{CSI-1}$$

wherein:

$Q'_{CSI-2}$ : the number of REs required for PUSCH to carry CSI Part2;

$O_{CSI-2}$: the number of bits occupied by CSI part2;

$\beta_{offset}^{PUSCH} = \beta_{offset}^{CSI-2}$ ; and

$L_{CSI-2}$ : the number of CRC check bits occupied by CSI part2.

When the UCI and the service data are multiplexed to the PUSCH, and when

$$\left\lceil(O_{CSI-2}+L_{CSI-2})*\beta_{offset}^{PUSCH}*\sum_{l=0}^{N_{symbol}^{PUSCH}-1}M_{sc}^{UCI}(l)/\sum_{r=0}^{C_{UL-SCH}-1}K_r\right\rceil$$ is greater than

$$\left\lceil\alpha*\sum_{l=0}^{N_{symbol}^{PUSCH}-1}M_{SC}^{UCI}(l)\right\rceil - Q'_{ACK} - Q'_{CSI-1}$$ , the CSI part2 is discarded. The CSI part2 is discarded according to priority

until $$\left\lceil(O_{CSI-2}+L_{CSI-2})*\beta_{offset}^{PUSCH}*\sum_{l=0}^{N_{symbol}^{PUSCH}-1}M_{sc}^{UCI}(l)/\sum_{r=0}^{C_{UL-SCH}-1}K_r\right\rceil$$ is equal to or less than

$$\left\lceil\alpha*\sum_{l=0}^{N_{symbol}^{PUSCH}-1}M_{SC}^{UCI}(l)\right\rceil - Q'_{ACK} - Q'_{CSI-1}$$ .

By transmitting only UCI over PUSCH (UCI-on-PUSCH), CSI Part2 will be discarded until the code rate of CSI Part2 is less than $c_T$ ($c_T$ is less than 1).

$$c_T = \frac{R}{\beta_{offset}^{CSI-2}}$$

wherein:

$R$ : the code rate of PUSCH.

If the UCI-on-PUSCH (UCI is transmitted over PCSCH) configured by RRC is in dynamic mode, the gNB indicates a group of PUSCH resource parameters to the UE via UCI offset indicator in uplink DCI (Downlink Control Information) for the UCI to transmit resources on the PUSCH, wherein each group of PUSCH resource parameters includes a group of $\beta_{offset}^{HARQ-ACK}$, $\beta_{offset}^{CSI-1}$, and $\beta_{offset}^{CSI-2}$, and the gNB can configure up to four groups of PUSCH resource parameters to the UE.

When the amount of UCI information carried by the PUSCH is large so that RE resources reserved for CSI Part2 cannot meet the requirement of CSI Part2, CSI Part2 may be discarded, resulting in the overdue CSI feedback and performance loss.

The embodiment of the present disclosure provides a method for dynamically adjusting PUSCH resource, preventing UCI from being discarded due to high code rate by dynamically adjusting UCI resources.

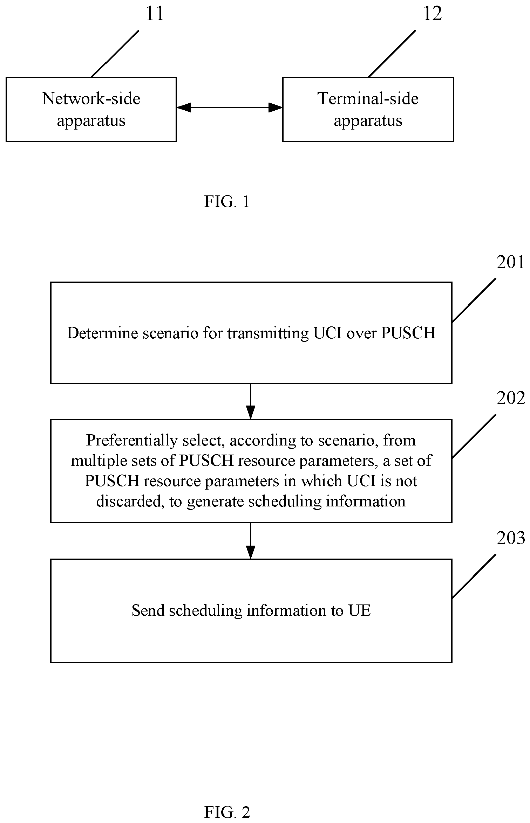

The network architecture according to the embodiment of the present disclosure is shown in FIG. 1. A network-side device 11 preferentially selects a PUSCH resource parameter which does not discard UCI, and sends the selected PUSCH resource parameter to a terminal-side device 12.

The network-side device 11 can include a gNB, and the terminal-side device 12 can include a UE.

FIG. 2 shows a method for dynamically adjusting PUSCH resource according to an embodiment of the present disclosure, applied to a network side, including:

Step 201, determining a scenario for transmitting UCI over a PUSCH;

Herein the scenario comprises at least one of: transmitting service data and UCI over the PUSCH (i.e., UCI multiplexing PUSCH carries UL-SCH), and transmitting only the UCI over the PUSCH (i.e., UCI multiplexing PUSCH does not carry UL-SCH);

Step 202, preferentially selecting, according to the scenario, a group of PUSCH resource parameters from a plurality of groups of PUSCH resource parameters that do not discard UCI to generate scheduling information.

Step 203, sending the scheduling information to the UE.

The embodiment of the disclosure can reduce the probability of discarding the UCI due to too high code rate when the UCI is multiplexed and transmitted on the PUSCH by dynamically adjusting the PUSCH resource parameters, thereby avoiding the performance loss caused by discarding the UCI, and have simple implementation and accurate control.

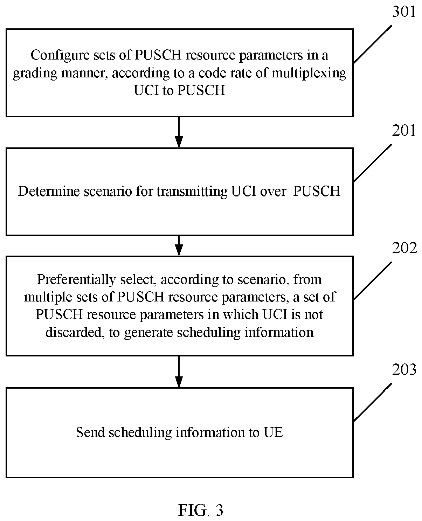

As shown in FIG. 3, in an embodiment, before step 201, the method further includes:

Step 301, configuring the groups of PUSCH resource parameters in a grading manner according to a code rate of multiplexing the UCI to the PUSCH.

The groups of PUSCH resource parameters can be configured in a grading manner according to a sequence of code rate from low to high.

The PUSCH resource parameters can include:

a HARQ-ACK offset $\beta_{offset}^{HARQ-ACK}$, a CSI-1 offset $\beta_{offset}^{CSI-1}$, and a CSI-2 offset $\beta_{offset}^{CSI-2}$.

Two to four groups of PUSCH resource parameters can be provided. In an optional embodiment, four groups of the PUSCH resource parameters are provided.

The multiple groups of configurations of the PUSCH resource parameters can be notified to UE through RRC signaling at the network side.

The network side can allocate PUSCH RB (Resource Block) resources to a UE according to the uplink service requirement of the UE.

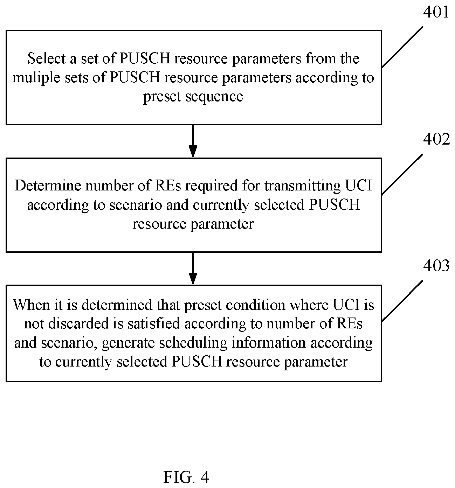

As shown in FIG. 4, in an embodiment, Step 202 includes:

Step 401, selecting a group of PUSCH resource parameters from the plurality of groups of PUSCH resource parameters according to a preset sequence.

The preset sequence can be the sequence from the low to the high of the code rate.

Step 402, determining the number of REs required for transmitting the UCI according to the scenario and currently selected PUSCH resource parameter.

The number of REs required for UCI can include at least one of the number $Q'_{ACK}$ of REs required for PUSCH channel to carry ACK, the number $Q'_{CSI-1}$ of REs required for PUSCH channel to carry CSI-1, and the number $Q'_{CSI-2}$ of REs required for PUSCH channel to carry CSI-2.

The method for calculating the number of REs required for UCI may refer to the description above, and will be not described herein again.

Step 403, when it is determined that a preset condition where the UCI is not discarded is satisfied according to the number of REs and the scenario, generating the scheduling information according to the currently selected PUSCH resource parameter.

When the currently selected PUSCH resource parameter does not meet the preset condition, the process continues polling the next group of PUSCH resource parameters.

In an embodiment, when none of PUSCH resource parameters in the plurality of groups of PUSCH resource parameters satisfies the preset condition, the method further includes:
Step 404, selecting a group of PUSCH resource parameters closest to the preset condition, and generating the scheduling information. In an embodiment, in the scenario where the service data and UCI are transmitted on the PUSCH, the number of REs required for UCI includes the number $Q'_{ACK}$ of REs required for PUSCH channel to carry ACK and the number $Q'_{CSI-1}$ of REs required for PUSCH to carry CSI-1, wherein the preset condition includes a first preset condition, and the first preset condition is:

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil$$

is less than or equal to

$$\left\lceil \alpha * \sum_{l=0}^{N_{symbol}^{PUSCH}-1} M_{SC}^{UCI}(l) \right\rceil - Q'_{ACK} - Q'_{CSI-1},$$

where $O_{CSI-2}$ represents the number of bits occupied by CSI-2, $L_{CSI-2}$ represents the number of Cyclic Redundancy Check (CRC) bits occupied by CSI-2, $\beta_{offset}^{PUSCH} = \beta_{offset}^{CSI-2}$, $\beta_{offset}^{CSI-2}$ represents the offset of CSI-2, $M_{sc}^{UCI}(l)$ represents the number of REs that the symbol $l$ in a PUSCH can be used to transmit UCI, $N_{Symbol}^{PUSCH}$ represents a total number of symbols occupied by the PUSCH, $C_{UL-SCH}$ represents the number of Codeblocks for PUSCH transmission, $K_r$ represents a size of Transport Block (TBSize) of each Codeblock, $\alpha$ represents a preset scaling, $Q'_{ACK}$ represents the number of REs required for PUSCH channel to carry ACK, and $Q'_{CSI-1}$ represents the number of REs required for PUSCH channel to carry CSI-1.

When there is no PUSCH resource parameter satisfying the first preset condition in the groups of PUSCH resource parameters, a group of PUSCH resource parameters closest to the first preset condition is selected, that is, a group of PUSCH resource parameters having a smallest subtraction result by subtracting

$$\left\lceil \alpha * \sum_{l=0}^{N_{symbol}^{PUSCH}-1} M_{SC}^{UCI}(l) \right\rceil - Q'_{ACK} - Q'_{CSI-1} \text{ from } \left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil$$

is selected to generate the scheduling information.

In an embodiment, in the scenario where only the UCI is transmitted over the PUSCH, the number of REs required for UCI includes: the number $Q'_{CSI-2}$ of REs required for the PUSCH channel to carry CSI-2, wherein the preset conditions include a second preset condition, and the second preset condition is:

a code rate $R_{CSI-2}$ of CSI-2 is less than or equal to $c_T$,

wherein $R_{CSI-2} = (O_{CSI-2} + L_{CSI-2}) / Q'_{CSI-2}$, and $c_T = \dfrac{R}{\beta_{offset}^{CSI-2}}$, and

wherein $Q'_{CSI-2}$ represents the number of REs required for the PUSCH to carry CSI-2, $O_{CSI-2}$ represents the number of bits occupied by the CSI-2, $L_{CSI-2}$ represents the number of CRC bits occupied by the CSI-2, $\beta_{offset}^{CSI-2}$ represents an offset of CSI-2, and R is a code rate of the PUSCH.

When there is no PUSCH resource parameter satisfying the second preset condition in the groups of PUSCH resource parameters, a group of PUSCH resource parameters closest to the second preset condition is selected, that is, a group of PUSCH resource parameters having a smallest subtraction result by subtracting $c_T$ from the code rate $R_{CSI-2}$ of CSI-2 is selected to generate the scheduling information. In an embodiment, the scheduling information includes a resource index of offset indicator, and Step 203 includes:
sending the scheduling information to the UE through Downlink Control Indication (DCI) carrying the resource index of offset Indicator (beta_offset Indicator).

Since the configured groups of PUSCH resource parameters is known to the UE, by transmitting only the resource index of beta_offset Indicator, the group of PUSCH resource parameters selected by the network side can be known, and the UCI is transmitted according to the PUSCH resource parameters selected by the network side, so as to avoid discarding CSI.

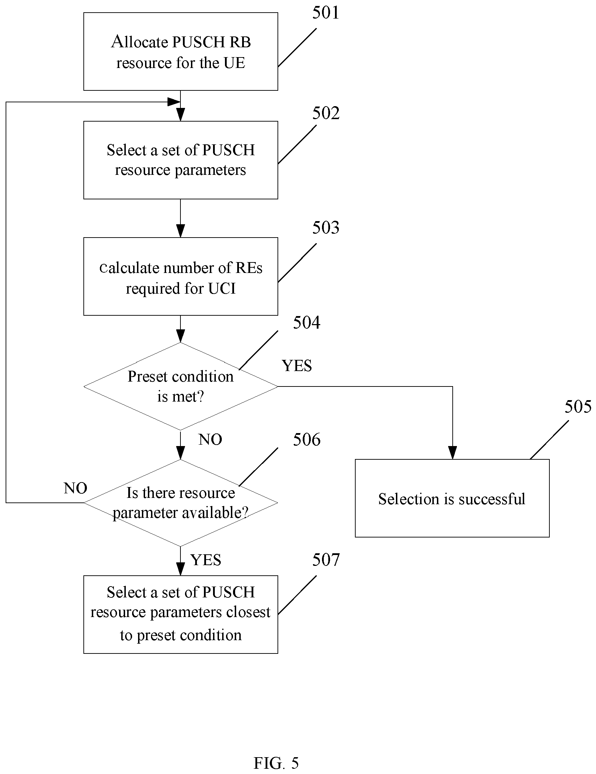

FIG. 5 shows a flowchart of a method of dynamically adjusting PUSCH resources according to an embodiment, the method comprising steps of:

Step 501, allocating PUSCH RB resource for the UE according to the uplink service requirement of the UE.

Step 502, selecting a group of PUSCH resource parameters from the groups of PUSCH resource parameters according to the sequence of the code rate from low to high.

Step 503, calculating the number of REs required for the UCI.

Step 504, judging whether the currently selected PUSCH resource parameter meets a preset condition, if yes, performing step 505, or if not, performing step 506.

In this step, it is judged whether the allocated PCSCH resource can carry UCI.

Step 505, in response to determining that the resource selection is successful, generating the scheduling information according to the currently selected PUSCH resource parameter.

Step 506, judging whether there is PUSCH resource parameter available, if no, executing Step 507, otherwise, returning to Step 502.

Step 507, selecting a group of PUSCH resource parameters closest to the preset condition to generate scheduling information.

The embodiments of the disclosure can reduce the probability that the UCI is discarded due to a high code rate when multiplexed and transmitted on the PUSCH to a certain degree. By dynamically adjusting the betaOffset of the UCI information (including ACK, CSI Part 1 and CSI Part 2), the PUSCH can carry more UCI information to avoid performance loss caused by discarding.

Hereinafter, some application examples will be described, in which four groups of PUSCH resource parameters are configured as shown in the following tables.

Table 1: the first group of betaOffset parameters

| Parameter name | Value |
|---|---|
| betaOffsetACK-Index 1 | 7 |
| betaOffsetACK-Index2 | 7 |
| betaOffsetACK-Index3 | 7 |
| betaOffsetCSIpart1-Index1 | 14 |
| betaOffsetCSIpart1-Index2 | 14 |
| betaOffsetCSIpart2-Index1 | 14 |
| betaOffsetCSIpart2-Index2 | 14 |

Table 2: the second group of betaOffset parameters

| Parameter name | Value |
|---|---|
| betaOffsetACK-Index 1 | 4 |
| betaOffsetACK-Index2 | 4 |
| betaOffsetACK-Index3 | 3 |
| betaOffsetCSIpart1-Index1 | 11 |
| betaOffsetCSIpart1-Index2 | 9 |
| betaOffsetCSIpart2-Index1 | 10 |

(continued)

| Parameter name | Value |
|---|---|
| betaOffsetCSIpart2-Index2 | 9 |

Table 3: the third group of betaOffset parameters

| Parameter name | Value |
|---|---|
| betaOffsetACK-Index 1 | 3 |
| betaOffsetACK-Index2 | 3 |
| betaOffsetACK-Index3 | 2 |
| betaOffsetCSIpart1-Index1 | 9 |
| betaOffsetCSIpart1-Index2 | 6 |
| betaOffsetCSIpart2-Index1 | 8 |
| betaOffsetCSIpart2-Index2 | 6 |

Table 4: the fourth group of betaOffset parameters

| Parameter name | Value |
|---|---|
| betaOffsetACK-Index1 | 2 |
| betaOffsetACK-Index2 | 2 |
| betaOffsetACK-Index3 | 1 |
| betaOffsetCSIpart1-Index1 | 7 |
| betaOffsetCSIpart1-Index2 | 3 |
| betaOffsetCSIpart2-Index1 | 5 |
| betaOffsetCSIpart2-Index2 | 3 |

Table 5: explanation of parameters

| Parameter name | Explanation of parameters | Range of value |
|---|---|---|
| betaOffsetACK-Index1 | (1) For indicating A/N resources<br>(2) Applicable condition: a bit number of A/N$\leq$2 | INTEGER (0 ... 31) |
| betaOffsetACK-Index2 | (1) For indicating A/N resources<br>(2) Applicable condition: 2< a bit number of A/N$\leq$11 | INTEGER (0 ... 31) |
| betaOffsetACK-Index3 | (1) For indicating A/N resources<br>(2) Applicable condition: a bit number of A/N >11 | INTEGER (0 ... 31) |
| betaOffsetCSIpart1-Index1 | (1) For indicating CSI Part1 resources<br>(2) Applicable condition: a bit number of CSI Part-1 $\leq$ 11 | INTEGER (0 ... 31) |
| betaOffsetCSIpart1-Index2 | (1) For indicating CSI Part1 | INTEGER (0 ... 31) |
| | resources<br>(2) Applicable condition: a bit number of CSI Part-1 >11 | |
| betaOffsetCSIpart2-Index1 | (1) For indicating CSI Part2 resources<br>(2) Applicable condition: a bit number of CSI Part-2 $\leq$ 11 | INTEGER (0 ... 31) |

(continued)

| Parameter name | Explanation of parameters | Range of value |
|---|---|---|
| betaOffsetCSIpart2-Index2 | (1) For indicating CSI Part2 resources<br>(2) Applicable condition: a bit number of CSI Part-2 > 11 | INTEGER (0 ... 31) |

Application example 1

Assuming that UCI is carried over a PUSCH channel and carries UL-SCH, the carrying of PUSCH resource parameter (UCI-on-PUSCH BetaOffset) is shown in Tables 1 to 3.
It is known that:

$$O_{ACK} = 3\text{bit}$$

$$L_{ACK} = 0\text{bit}$$

$$O_{CSI-1} = 10\text{bit}$$

$$L_{CSI-1} = 0\text{bit}$$

$$Q^{`}_{CSI-2} = 5\text{bit}$$

$$O_{CSI-2} = 0\text{bit}$$

$$C_{UL-SCH} = 1$$

$$K_r = 200\text{bit}$$

$M_{sc}^{UCI}(l)$ : there are 12 symbols per RB, and 12 REs per symbol for transmission of PUSCH

$$N_{Symbol}^{PUSCH} = 12$$

$$\alpha = 1$$

$$l_0 = 0$$

With a first group of PUSCH resource parameters (Betaoffset):

$$\beta_{offset}^{HARQ-ACK} = 7, \quad \beta_{offset}^{CSI-1} = 14, \text{ and } \quad \beta_{offset}^{CSI-2} = 14,$$

it can be obtained by calculation:

$$a \cdot \sum_{l=0}^{N_{symbol}^{PUSCH}-1} M_{sc}^{UCI}(l) = 144$$

$$Q_{ACK}^{'} = 16\text{REs}$$

$$Q_{CSI-1}^{'} = 101$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 51$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = 27$$

The first preset condition cannot be met, and then a second group of PUSCH resource parameters will be searched.

With the second group of PUSCH resource parameters (Betaoffset):

$$\beta_{offset}^{HARQ-ACK} = 4, \quad \beta_{offset}^{CSI-1} = 11, \text{ and } \quad \beta_{offset}^{CSI-2} = 10,$$

it can be obtained by calculation:

$$a \cdot \sum_{l=0}^{N_{symbol}^{PUSCH}-1} M_{sc}^{UCI}(l) = 144$$

$$Q_{ACK}^{'} = 9$$

$$Q_{CSI-1}^{'} = 80$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 36$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = 55$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil$$

have met is less than or equal to

$$\left\lceil \alpha * \sum_{l=0}^{N_{symbol}^{PUSCH}-1} M_{SC}^{UCI}(l) \right\rceil - Q_{ACK}^{`} - Q_{CSI-1}^{`}$$

, and then the second group of PUSCH resource parameters is selected for the resource of UCI-on-PUSCH, and indicated to the UE through the resource in the DCI.

Application example 2

Assuming that UCI is carried over a PUSCH channel and carries UL-SCH, the carrying of PUSCH resource parameter (UCI-on-PUSCH BetaOffset) is shown in Tables 1 to 3.

It is known that:

$$O_{ACK} = 1bit$$

$$L_{ACK} = 0bit$$

$$O_{CSI-1} = 11bit$$

$$L_{CSI-1} = 6bit$$

$$Q_{CSI-2}^{`} = 3bit$$

$$O_{CSI-2} = 0bit$$

$$C_{UL-SCH} = 1$$

$$K_r = 200bit$$

$M_{sc}^{UCI}(l)$ : there are 12 symbols per RB, and 12 REs per symbol for transmission of PUSCH

$$N_{Symbol}^{PUSCH} = 12$$

$$\alpha = 1$$

$$l_0 = 0$$

With the first group of PUSCH resource parameters (Betaoffset):

$$\beta_{offset}^{HARQ-ACK} = 7, \quad \beta_{offset}^{CSI-1} = 14, \text{ and } \quad \beta_{offset}^{CSI-2} = 14,$$

it can be obtained by calculation:

$$a \cdot \sum_{l=0}^{N_{symbol}^{PUSCH}-1} M_{sc}^{UCI}(l) = 144$$

$$Q_{ACK}^{`} = 6$$

$$Q_{CSI-1}^{`} = 172$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 31$$

$$\left\lceil \alpha * \sum_{l=0}^{N_{symbol}^{PUSCH}-1} M_{SC}^{UCI}(l) \right\rceil - Q_{ACK}^{`} - Q_{CSI-1}^{`} = -34$$

The first preset condition cannot be met, and then a second group of PUSCH resource parameters will be searched.

With the second group of PUSCH resource parameters (Betaoffset):

$$\beta_{offset}^{HARQ-ACK} = 4, \quad \beta_{offset}^{CSI-1} = 11, \text{ and } \quad \beta_{offset}^{CSI-2} = 10,$$

it can be obtained by calculation:

$$a \cdot \sum_{l=0}^{N_{symbol}^{PUSCH}-1} M_{sc}^{UCI}(l) = 144$$

$$Q_{ACK}^{`} = 3$$

$$Q_{CSI-1}^{`} = 135$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 22$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = 6$$

The first preset condition cannot be met, and then a third group of PUSCH resource parameters will be searched.

With the third group of PUSCH resource parameters (Betaoffset):

$$\beta_{offset}^{HARQ-ACK} = 3, \quad \beta_{offset}^{CSI-1} = 9, \text{ and } \beta_{offset}^{CSI-2} = 8$$

it can be obtained by calculation:

$$a \cdot \sum_{l=0}^{N_{symbol}^{PUSCH}-1} M_{sc}^{UCI}(l) = 144$$

$$Q_{ACK}^{'} = 3$$

$$Q_{CSI-1}^{'} = 111$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 18$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = 30$$

have met $\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil$ is less than or equal to

$\left\lceil \alpha * \sum_{l=0}^{N_{symbol}^{PUSCH}-1} M_{SC}^{UCI}(l) \right\rceil - Q_{ACK}^{'} - Q_{CSI-1}^{'}$ , and then the third group of PUSCH resource parameters is selected for the resource of the UCI-on-PUSCH and indicated the UE through the resource in the DCI.

Application example 3

Assuming that UCI is carried over a PUSCH channel without carrying UL-SCH, the carrying of PUSCH resource parameter (UCI-on-PUSCH BetaOffset) is shown in Tables 1 to 3.

It is known that:

$$O_{ACK} = 2\text{bit}$$

$$L_{ACK} = 0\text{bit}$$

$$O_{CSI-1} = 5\text{bit}$$

$$L_{CSI-1} = 3\text{bit}$$

$$Q'_{CSI-2} = 12\text{bit}$$

$$O_{CSI-2} = 6\text{bit}$$

$M_{sc}^{UCI}(l)$ : there are 12 symbols per RB, and 12 REs per symbol for transmission of PUSCH

$$N_{Symbol}^{PUSCH} = 12$$

$$\alpha = 1$$

$$l_0 = 0$$

$$R = 0.81$$

$$Q_m = 4$$

With the first group of PUSCH resource parameters (Betaoffset):

$$\beta_{offset}^{HARQ-ACK} = 7, \quad \beta_{offset}^{CSI-1} = 14, \text{ and } \quad \beta_{offset}^{CSI-2} = 14$$

it can be obtained by calculation:

$$a \cdot \sum_{l=0}^{N_{symbol}^{PUSCH}-1} M_{sc}^{UCI}(l) = 144$$

$$Q'_{ACK} = 5$$

$$Q'_{CSI-1} = 35$$

$$c_T = 1/7$$

$$R_{CSI-2} = 18/\left( \left\lceil \alpha * \sum_{l=0}^{N_{symbol}^{PUSCH}-1} M_{SC}^{UCI}(l) \right\rceil - Q_{ACK}^{'} - Q_{CSI-1}^{'} \right) = 0.173$$

The second preset condition cannot be met, and then a second group of PUSCH resource parameters will be searched.

With the second group of PUSCH resource parameters (Betaoffset):

$$\beta_{offset}^{HARQ-ACK} = 4, \quad \beta_{offset}^{CSI-1} = 3, \text{ and } \quad \beta_{offset}^{CSI-2} = 9$$

it can be obtained by calculation:

$$a \cdot \sum_{l=0}^{N_{symbol}^{PUSCH}-1} M_{sc}^{UCI}(l) = 144$$

$$Q_{ACK}^{'} = 3$$

$$Q_{CSI-1}^{'} = 8$$

$$c_T = 1/7$$

$$R_{CSI-2} = 18/\left( \left\lceil \alpha * \sum_{l=0}^{N_{symbol}^{PUSCH}-1} M_{SC}^{UCI}(l) \right\rceil - Q_{ACK}^{'} - Q_{CSI-1}^{'} \right) = 0.135$$

It has been met that $R_{CSI-2}$ is less than $c_T$, and then the second group of PUSCH resource parameters for the resource of the UCI-on-PUSCH is selected and indicated to the UE through the resource in the DCI.

Application example 4

Assuming UCI is carried over PUSCH channel and carries UL-SCH, the carrying of PUSCH resource parameters (UCI-on-PUSCH BetaOffset) are shown in Tables 1 to 3.

It is known that:

$$O_{ACK} = 1\text{bit}$$

$$L_{ACK} = 0\text{bit}$$

$$O_{CSI-1} = 11\text{bit}$$

$$L_{CSI-1} = 6\text{bit}$$

$$Q_{CSI-2}^{'} = 11\text{bit}$$

$$O_{CSI-2} = 6\text{bit}$$

$$C_{UL-SCH} = 1$$

$$K_r = 200\text{bit}$$

$M_{sc}^{UCI}(l)$ : there are 12 symbols per RB, and 12 REs per symbol for transmission of PUSCH

$$N_{Symbol}^{PUSCH} = 12$$

$$\alpha = 1$$

$$l_0 = 0$$

With the first group of PUSCH resource parameters (Betaoffset):

$$\beta_{offset}^{HARQ-ACK} = 7, \quad \beta_{offset}^{CSI-1} = 14, \text{ and } \beta_{offset}^{CSI-2} = 14$$

it can be obtained by calculation:

$$a \cdot \sum_{l=0}^{N_{symbol}^{PUSCH}-1} M_{sc}^{UCI}(l) = 144$$

$$Q_{ACK}^{'} = 6$$

$$Q_{CSI-1}^{'} = 172$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 172$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = -34$$

The first preset condition cannot be met, and then a second group of PUSCH resource parameters will be searched.

With the second group of PUSCH resource parameters (Betaoffset):

$$\beta_{offset}^{HARQ-ACK} = 4, \quad \beta_{offset}^{CSI-1} = 11, \text{ and } \quad \beta_{offset}^{CSI-2} = 10$$

it can be obtained by calculation:

$$a \cdot \sum_{l=0}^{N_{symbol}^{PUSCH}-1} M_{sc}^{UCI}(l) = 144$$

$$Q_{ACK}^{'} = 3$$

$$Q_{CSI-1}^{'} = 135$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 123$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = 6$$

The first preset condition cannot be met, and then a third group of PUSCH resource parameters will be searched.

With the third group of PUSCH resource parameters (Betaoffset):

$$\beta_{offset}^{HARQ-ACK} = 3, \quad \beta_{offset}^{CSI-1} = 9, \text{ and } \quad \beta_{offset}^{CSI-2} = 8$$

it can be obtained by calculation:

$$a \cdot \sum_{l=0}^{N_{symbol}^{PUSCH}-1} M_{sc}^{UCI}(l) = 144$$

$$Q_{ACK}^{'} = 3$$

$$Q_{CSI-1}^{'} = 111$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 98$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = 30$$

The first preset condition cannot be met, and then a fourth group of PUSCH resource parameters will be searched.

With the fourth group of PUSCH resource parameters (Betaoffset):

$$\beta_{offset}^{HARQ-ACK} = 2, \quad \beta_{offset}^{CSI-1} = 7, \text{ and } \beta_{offset}^{CSI-2} = 5$$

it can be obtained by calculation:

$$a \cdot \sum_{l=0}^{N_{symbol}^{PUSCH}-1} M_{sc}^{UCI}(l) = 144$$

$$Q_{ACK}^{'} = 2$$

$$Q_{CSI-1}^{'} = 86$$

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil = 62$$

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} = 56$$

The remaining RE resources still cannot carry CSI-2, so that the CSI part2 needs to discard part of CSI resources according to the priority policy of the protocol standard until the fourth group of PUSCH resources can carry CSI part2. The fourth group of PUSCH resource parameters is selected for the UCI-on-PUSCH resources, and indicated to the UE through the resources in the DCI.

It should be noted that, in the fourth application example, none of the four groups of PUSCH resource parameters meets the first preset condition, so the fourth group of PUSCH resource parameters closest to the first preset condition is selected for the UCI-on-PUSCH resources.

To sum up, the technical solution according to the embodiment of the present disclosure is simple to implement and accurate in control, and avoids the UCI-on-PUSCH part being discarded by adjusting the code rate of UCI-on-PUSCH information in the process of PUSCH resource scheduling.

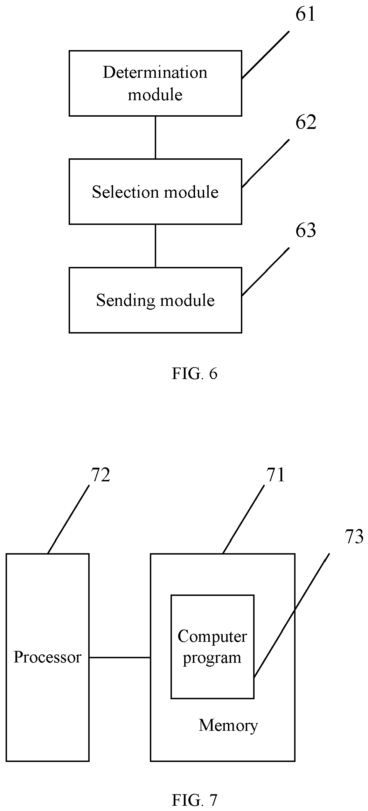

As shown in FIG. 6, there is also provided a device for dynamically adjusting PUSCH resources according to an embodiment of the present disclosure, including:

a determination module 61, configured to determine a scenario for transmitting UCI over a PUSCH, wherein the scenario comprises at least one of: transmitting service data and UCI over the PUSCH, and transmitting only the UCI over the PUSCH;

a selection module 62, configured to preferentially select, according to the scenario, a group of PUSCH resource parameters from a plurality of groups of PUSCH resource parameters that do not discard UCI to generate scheduling information; and

a sending module 63, configured to send the scheduling information to the UE.

The embodiment of the disclosure can reduce the probability of discarding the UCI due to too high code rate when the UCI is multiplexed and transmitted over the PUSCH by dynamically adjusting the PUSCH resource parameters, thereby avoiding the performance loss caused by discarding the UCI, and having simple implementation and accurate control.

In an embodiment, the device further includes:

a configuration module, configured to configure the groups of PUSCH resource parameters in a grading manner according to a code rate of multiplexing the UCI to the PUSCH.

In an embodiment, the configuration module is configured to:

configure two to four groups of PUSCH resource parameters in a grading manner according to a sequence of code rate from low to high.

In an embodiment, the PUSCH resource parameters include:

a hybrid automatic repeat request-acknowledgement (HARQ-ACK) offset $\beta_{offset}^{HARQ-ACK}$, channel state information-first part (CSI-1) offset $\beta_{offset}^{CSI-1}$, and channel state information-second part (CSI-2) offset $\beta_{offset}^{CSI-2}$.

In an embodiment, the selection module 62 is configured to:

select a group of PUSCH resource parameters from the plurality of groups of PUSCH resource parameters according to a preset sequence;

determine the number of REs required for transmitting the UCI according to the scenario and currently selected PUSCH resource parameter; and

when it is determined that a preset condition where the UCI is not discarded is satisfied according to the number of REs and the scenario, generate the scheduling information according to the currently selected PUSCH resource parameter.

In an embodiment, the selection module 62 is further configured to:

select a group of PUSCH resource parameters closest to the preset condition to generate the scheduling information.

In an embodiment, in the scenario where the service data and UCI are transmitted over the PUSCH, the number of REs required for UCI includes the number $Q'_{ACK}$ of REs required for PUSCH channel to carry ACK and the number $Q'_{CSI-1}$ of REs required for PUSCH to carry CSI-1, wherein the preset condition includes a first preset condition, and the first preset condition is: $\left\lceil (O_{CSI-2} + L_{CSI-2}) * \beta_{offset}^{PUSCH} * \sum_{l=0}^{N_{symbol}^{PUSCH}-1} M_{sc}^{UCI}(l) \Big/ \sum_{r=0}^{C_{UL-SCH}-1} K_r \right\rceil$ is less than or equal to

$\left\lceil \alpha * \sum_{l=0}^{N_{symbol}^{PUSCH}-1} M_{SC}^{UCI}(l) \right\rceil - Q'_{ACK} - Q'_{CSI-1}$, where $O_{CSI-2}$ represents the number of bits occupied by CSI-2, $L_{CSI-2}$

represents the number of Cyclic Redundancy Check (CRC) bits occupied by CSI-2, $\beta_{offset}^{PUSCH} = \beta_{offset}^{CSI-2}$, $\beta_{offset}^{CSI-2}$

represents the offset of CSI-2, $M_{sc}^{UCI}(l)$ represents the number of REs that the symbol $l$ in a PUSCH can be used to transmit UCI, $N_{Symbol}^{PUSCH}$ represents a total number of symbols occupied by the PUSCH, $C_{UL-SCH}$ represents the number of Codeblocks for PUSCH transmission, $K_r$ represents a size of Transport Block (TBSize) of each Codeblock, $\alpha$ represents a preset scaling, $Q'_{ACK}$ represents the number of REs required for PUSCH channel to carry ACK, and $Q'_{CSI-1}$ represents the number of REs required for PUSCH channel to carry CSI-1.

In an embodiment, in the scenario where only the UCI is transmitted on the PUSCH, the number of REs required for UCI includes: the number $Q'_{CSI-2}$ of REs required for the PUSCH channel to carry CSI-2, wherein the preset conditions include a second preset condition, and the second preset condition is:

a code rate $R_{CSI-2}$ of CSI-2 is less than or equal to $c_T$,

wherein $R_{CSI-2} = (O_{CSI-2} + L_{CSI-2}) / Q'_{CSI-2}$ , and $c_T = \dfrac{R}{\beta_{offset}^{CSI-2}}$ , and

wherein $Q'_{CSI-2}$ represents the number of REs required for the PUSCH to carry CSI-2, $O_{CSI-2}$ represents the number of bits occupied by the CSI-2, $L_{CSI-2}$ represents the number of CRC bits occupied by the CSI-2, $\beta_{offset}^{CSI-2}$ represents an offset of CSI-2, and R is a code rate of the PUSCH.

In an embodiment, the sending module 63 is configured to:
sending the scheduling information to the UE through Downlink Control Indication (DCI) carrying the resource index of offset Indicator.

As shown in FIG. 7, an embodiment of the present disclosure further provides an apparatus for dynamically adjusting PUSCH resources, including: a memory 71, a processor 72 and a computer program 73 stored on the memory 71 and executable by the processor 72, wherein the processor 72 implements the method of dynamically adjusting PUSCH resources when executing the program.

An embodiment of the present disclosure also provides a computer-readable storage medium storing computer-executable instructions for performing the method of dynamically adjusting PUSCH resources.

In this embodiment, the storage medium can include, but is not limited to various media capable of storing program codes such as a U-disk, a Read-Only Memory (ROM), a Random-Access Memory (RAM), a removable hard disk, a magnetic disk, or an optical disk.

It will be understood by those having ordinary skill in the art that all or some of the steps of the methods, systems, functional modules/units in the devices as disclosed above can be implemented as software, firmware, hardware, or suitable combinations thereof. In a hardware implementation, the division between functional modules/units mentioned in the above description does not necessarily correspond to the division of physical components; for example, one physical component may have multiple functions, or one function or step may be performed by several physical components in cooperation. Some or all of the components may be implemented as software executed by a processor, such as a digital signal processor or microprocessor, or as hardware, or as an integrated circuit, such as an application specific integrated circuit. Such software may be distributed on computer readable media, which may include computer-readable storage media (or non-transitory media), and communication media (or transitory media). The term computer storage media includes volatile and nonvolatile, removable and non-removable media implemented in any method or technology for storage of information such as computer readable instructions, data structures, program modules or other data, as is well known to those skilled in the art. Computer storage media includes, but is not limited to, RAM, ROM, EEPROM, flash memory or other memory technology, CD-ROM, Digital Versatile Disks (DVD) or other optical disk storage, magnetic cassettes, magnetic tape, magnetic disk storage or other magnetic storage devices, or any other medium which can be used to store the desired information and which can accessed by a computer. In addition, communication media typically embodies computer readable instructions, data structures, program modules or other data in a modulated data signal such as a carrier wave or other transport mechanism and includes any information delivery media as is well known to those skilled in the art.

## Claims

1. A method for dynamically adjusting Physical Uplink Shared Channel, PUSCH, resource, comprising steps of:

determining (201) a scenario for transmitting Uplink Control Information, UCI, over a PUSCH, wherein the scenario includes at least one of: transmitting service data and UCI over the PUSCH, and transmitting only the UCI over the PUSCH;
selecting (202), according to the scenario, a group of PUSCH resource parameters from a plurality of groups of PUSCH resource parameters that do not discard UCI to generate scheduling information; and
sending (203) the scheduling information to User Equipment, UE;

wherein the step (202) of selecting, according to the scenario, a group of PUSCH resource parameters from the plurality of groups of PUSCH resource parameters that do not discard UCI to generate scheduling information comprises:

> selecting (401) the group of PUSCH resource parameters from the plurality of groups of PUSCH resource parameters according to a preset sequence;
> determining (402) the number of Resource Elements, REs, required for transmitting the UCI according to the scenario and currently selected PUSCH resource parameter; and
> when it is determined, according to the number of REs and the scenario, that a preset condition that the UCI is not discarded is satisfied, generating (403) the scheduling information according to the currently selected PUSCH resource parameter.

2. The method according to claim 1, wherein before the step (201) of determining the scenario for transmitting the UCI through PUSCH, the method further comprises:
configuring (301) the groups of PUSCH resource parameters according to a code rate grading of multiplexing the UCI to the PUSCH.

3. The method according to claim 2, wherein the step (301) of configuring the groups of PUSCH resource parameters according to the code rate grading of multiplexing the UCI to the PUSCH comprises:
configuring two to four groups of PUSCH resource parameters in a grading manner according to a sequence of code rate from low to high.

4. The method according to any one of claims 1 to 3, wherein the PUSCH resource parameters comprise:

a Hybrid Automatic Repeat Request-Acknowledgement, HARQ-ACK offset $\beta_{offset}^{HARQ-ACK}$ , a Channel Status Information Part 1, CSI-1, offset $\beta_{offset}^{CSI-1}$ , and a Channel Status Information Part 2, CSI-2, offset $\beta_{offset}^{CSI-2}$ .

5. The method according to claim 1, wherein when none of PUSCH resource parameters in the plurality of groups of PUSCH resource parameters satisfies the preset condition, the method further comprises:
selecting a group of PUSCH resource parameters closest to the preset condition to generate the scheduling information.

6. The method according to claim 1 or 5, wherein in the scenario where the service data and UCI are transmitted over the PUSCH, the number of REs required for UCI includes the number $Q_{ACK}^{'}$ of REs required for PUSCH channel to carry ACK and the number $Q_{CSI-1}^{'}$ of REs required for PUSCH to carry CSI-1, and the preset condition includes a first preset condition:

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil$$ is less than or equal to

$$\left\lceil \alpha * \sum_{l=0}^{N_{symbol}^{PUSCH}-1} M_{SC}^{UCI}(l) \right\rceil - Q_{ACK}^{'} - Q_{CSI-1}^{'} ,$$

where $O_{CSI-2}$ represents the number of bits occupied by CSI-2, $L_{CSI-2}$ represents the number of Cyclic Redundancy Check, CRC, bits occupied by CSI-2, $\beta_{offset}^{PUSCH} = \beta_{offset}^{CSI-2}$, $\beta_{offset}^{CSI-2}$ represents an offset of CSI-2, $M_{sc}^{UCI}(l)$ represents the number of REs that the symbol $l$ in the PUSCH can be used to transmit UCI, $N_{Symbol}^{PUSCH}$ represents a total number of symbols occupied by the PUSCH, $C_{UL-SCH}$ represents the number of Codeblocks for PUSCH transmission, $K_r$ represents a size of Transport Block of each Codeblock, $\alpha$ represents a preset scaling, $Q_{ACK}^{'}$ represents the number of REs required for PUSCH channel to carry ACK, and $Q'_{CSI-1}$ represents the number of REs required for PUSCH channel to carry CSI-1.

7. The method according to claim 1 or 5, wherein in the scenario where only the UCI is transmitted over the PUSCH, the number of REs required for UCI includes: the number $Q'_{CSI-2}$ of REs required for the PUSCH channel to carry CSI-2, and the preset conditions include a second preset condition:

a code rate $R_{CSI-2}$ of CSI-2 is less than or equal to $c_T$,

wherein $R_{CSI-2} = (O_{CSI-2} + L_{CSI-2}) / Q'_{CSI-2}$, and $c_T = \dfrac{R}{\beta_{offset}^{CSI-2}}$, and

wherein $Q'_{CSI-2}$ represents the number of REs required for the PUSCH to carry CSI-2, $O_{CSI-2}$ represents the number of bits occupied by the CSI-2, $L_{CSI-2}$ represents the number of CRC bits occupied by the CSI-2, $\beta_{offset}^{CSI-2}$ represents an offset of CSI-2, and $R$ is a code rate of the PUSCH.

8. The method according to claim 1, wherein the scheduling information includes a resource index of offset indicator and the step (203) of sending the scheduling information to the UE comprises:
sending the scheduling information to the UE through Downlink Control Indication, DCI, carrying the resource index of offset indicator.

9. A device for dynamically adjusting PUSCH resource, comprising:

a determination module (61), configured to determine a scenario for transmitting Uplink Control Information, UCI, over a PUSCH, wherein the scenario includes at least one of: transmitting service data and UCI over the PUSCH, and transmitting only the UCI over the PUSCH;
a selection module (62), configured to select, according to the scenario, a group of PUSCH resource parameters from a plurality of groups of PUSCH resource parameters that do not discard UCI to generate scheduling information; and
a sending module (63), configured to send the scheduling information to a User Equipment, UE;
wherein the selection module (62) is configured to:

select the group of PUSCH resource parameters from the plurality of groups of PUSCH resource parameters according to a preset sequence;
determine the number of Resource Elements, REs, required for transmitting the UCI according to the scenario and currently selected PUSCH resource parameter; and
when it is determined that a preset condition where the UCI is not discarded is satisfied according to the number of REs and the scenario, generate the scheduling information according to the currently selected PUSCH resource parameter.

10. An apparatus for dynamically adjusting PUSCH resource, comprising: a memory (71), a processor (72) and a computer program (73) stored in the memory and executable by the processor (72), wherein the processor (72) implements the method for dynamically adjusting PUSCH resource according to any one of claims 1 to 8 when executing the computer program (73).

11. A computer-readable storage medium storing computer-executable instructions for carrying out the method of dynamically adjusting PUSCH resource of any one of claims 1 to 8.

**Patentansprüche**

1. Verfahren zum dynamischen Anpassen der PUSCH-Ressource (Physical Uplink Shared Channel), das die folgenden Schritte umfasst:

Bestimmen (201) eines Szenarios zum Übertragen von Uplink-Kontrollinformationen (UCI) über einen PUSCH, wobei das Szenario mindestens eines von Folgendem umfasst: Übertragen von Dienstdaten und UCI über den PUSCH, und Übertragen nur der UCI über den PUSCH;

Auswählen (202), gemäß dem Szenario, einer Gruppe von PUSCH-Ressourcenparametern aus einer Vielzahl von Gruppen von PUSCH-Ressourcenparametern, die die UCI nicht verwerfen, um Planungsinformationen zu erzeugen; und

Senden (203) der Planungsinformationen an Benutzergeräte (UE)

wobei der Schritt (202) des Auswählens, gemäß dem Szenario, einer Gruppe von PUSCH-Ressourcenparametern aus der Vielzahl von Gruppen von PUSCH-Ressourcenparametern, die die UCI nicht verwerfen, um Planungsinformationen zu erzeugen, umfasst:

Auswählen (401) der Gruppe von PUSCH-Ressourcenparametern aus der Vielzahl von Gruppen von PUSCH-Ressourcenparametern gemäß einer voreingestellten Sequenz;

Bestimmen (402) der Anzahl von Ressourcenelementen (Res) die für die Übertragung der UCI gemäß dem Szenario und dem aktuell ausgewählten PUSCH-Ressourcenparameter erforderlich sind; und

wenn gemäß der Anzahl von REs und dem Szenario festgestellt wird, dass eine voreingestellte Bedingung, die UCI nicht verwirft, erfüllt ist, Erzeugen (403) der Planungsinformationen gemäß dem aktuell ausgewählten PUSCH-Ressourcenparameter.

2. Verfahren nach Anspruch 1, wobei das Verfahren vor dem Schritt (201) des Bestimmens des Szenarios für die Übertragung der UCI über PUSCH ferner umfasst:

Konfigurieren (301) der Gruppen von PUSCH-Ressourcenparametern gemäß einer Coderaten-Abstufung des Multiplexens der UCI mit dem PUSCH.

3. Verfahren nach Anspruch 2, wobei der Schritt (301) des Konfigurierens der Gruppen von PUSCH-Ressourcenparametern gemäß der Coderaten-Abstufung des Multiplexens der UCI mit dem PUSCH umfasst:

Konfigurieren von zwei bis vier Gruppen von PUSCH-Ressourcenparametern in einer Abstufungsweise gemäß einer Sequenz der Coderate von niedrig bis hoch.

4. Verfahren nach einem der Ansprüche 1 bis 3, wobei die PUSCH-Ressourcenparameter Folgendes umfassen:

einen HARQ-ACK-Offset (Hybrid Automatic Repeat Request-Acknowledgement) $\beta_{offset}^{HARQ-ACK}$, einen CSI-1-Offset (Channel Status Information Part 1) $\beta_{offset}^{CSI-1}$ und einen CSI-2-Offset (Channel Status Information Part 2) $\beta_{offset}^{CSI-2}$.

5. Verfahren nach Anspruch 1, wobei, wenn keiner der PUSCH-Ressourcenparameter in der Vielzahl von Gruppen von PUSCH-Ressourcenparametern die voreingestellte Bedingung erfüllt, das Verfahren ferner umfasst:

Auswählen einer Gruppe von PUSCH-Ressourcenparametern, die der voreingestellten Bedingung am nächsten kommt, um die Planungsinformationen zu erzeugen.

6. Verfahren nach Anspruch 1 oder 5, wobei in dem Szenario, in dem die Dienstdaten und UCI über den PUSCH übertragen werden, die Anzahl der erforderlichen REs für UCI die Anzahl $Q'_{ACK}$ der REs, die für den PUSCH-Kanal erforderlich sind, um ACK zu übertragen, und die Anzahl $Q'_{CSI-1}$ der REs, die für den PUSCH erforderlich sind, um CSI-1 zu übertragen, umfasst, und die voreingestellte Bedingung eine erste voreingestellte Bedingung umfasst:

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil$$ ist kleiner oder gleich wie

$$\left\lceil \alpha * \sum_{l=0}^{N_{symbol}^{PUSCH}-1} M_{SC}^{UCI}(l) \right\rceil - Q'_{ACK} - Q'_{CSI-1},$$

wobei $O_{CSI-2}$ die Anzahl der von CSI-2 belegten Bits darstellt, $L_{CSI-2}$ die Anzahl der von CSI-2 belegten CRC-Bits (Cyclic Redundancy Check) darstellt, $\beta_{offset}^{PUSCH} = \beta_{offset}^{CSI-2}$, $\beta_{offset}^{CSI-2} =$, einen Offset von CSI-2 darstellt,

$M_{sc}^{UCI}(l)$ die Anzahl der Res darstellt, die das Symbol *l* im PUSCH zur Übertragung von UCI verwenden kann, $N_{Symbol}^{PUSCH}$ die Gesamtzahl der vom PUSCH belegten Symbole darstellt, $C_{UL\text{-}SCH}$ die Anzahl der Codeblöcke für die PUSCH-Übertragung darstellt, $K_r$ die Größe des Transportblocks jedes Codeblocks darstellt, $\alpha$ eine voreingestellte Skalierung darstellt, $Q_{ACK}^{'}$ die Anzahl der REs darstellt, die für den PUSCH-Kanal erforderlich sind, um ACK zu übertragen, und $Q_{CSI\text{-}1}^{'}$ die Anzahl der REs darstellt, die für den PUSCH-Kanal erforderlich sind, um CSI-1 zu übertragen.

**7.** Verfahren nach Anspruch 1 oder 5, wobei in dem Szenario, in dem nur die UCI über den PUSCH übertragen wird, die Anzahl der für UCI erforderlichen REs umfasst: die Anzahl $Q_{CSI\text{-}2}^{'}$ der REs, die für den PUSCH-Kanal zur Übertragung von CSI-2 erforderlich sind, und die voreingestellten Bedingungen eine zweite voreingestellte Bedingung umfassen:

eine Coderate $R_{CSI\text{-}2}$ von CSI-2 kleiner oder gleich $c_T$,

wobei $R_{CSI\text{-}2} = (O_{CSI\text{-}2} + L_{CSI\text{-}2}) / Q_{CSI\text{-}2}^{'}$, und $c_T = \dfrac{R}{\beta_{offset}^{CSI\text{-}2}}$, und

wobei $Q_{CSI\text{-}2}^{'}$ die Anzahl der REs darstellt, die für den PUSCH erforderlich sind, um CSI-2 zu übertragen, $O_{CSI\text{-}2}$ die Anzahl der von CSI-2 belegten Bits darstellt, $L_{CSI\text{-}2}$ die Anzahl der von CSI-2 belegten CRC-Bits darstellt, $\beta_{offset}^{CSI\text{-}2}$ einen Offset von CSI-2 darstellt, und $R$ eine Coderate des PUSCH ist.

**8.** Verfahren nach Anspruch 1, wobei die Planungsinformation einen Ressourcenindex des Offset-Indikators enthält und der Schritt (203) des Sendens der Planungsinformation an das UE umfasst:
Senden der Planungsinformation an das UE durch Downlink-Kontrollindikation (DCI) die den Ressourcenindex des Offset-Indikators trägt.

**9.** Vorrichtung zum dynamischen Einstellen der PUSCH-Ressourcen, umfassend:

ein Bestimmungsmodul (61), das so konfiguriert ist, dass es ein Szenario zum Übertragen von Uplink-Kontrollinformationen (UCI) über einen PUSCH bestimmt, wobei das Szenario mindestens eines der Folgenden umfasst: Übertragen von Dienstdaten und UCI über den PUSCH, und Übertragen nur der UCI über den PUSCH;
ein Auswahlmodul (62), das so konfiguriert ist, dass es entsprechend dem Szenario eine Gruppe von PUSCH-Ressourcenparametern aus einer Vielzahl von Gruppen von PUSCH-Ressourcenparametern auswählt, die die UCI nicht verwerfen, um Planungsinformationen zu erzeugen; und
ein Sendemodul (63), das so konfiguriert ist, dass es die Planungsinformationen an ein Benutzergerät (UE) sendet;
wobei das Auswahlmodul (62) konfiguriert ist, um:

die Gruppe von PUSCH-Ressourcenparametern aus der Vielzahl von Gruppen von PUSCH-Ressourcenparametern gemäß einer voreingestellten Sequenz auszuwählen;
die Anzahl der Ressourcenelemente REs zu bestimmen, die für die Übertragung der UCI gemäß dem Szenario und dem aktuell ausgewählten PUSCH-Ressourcenparameter erforderlich sind; und
wenn festgestellt wird, dass eine voreingestellte Bedingung, bei der die UCI nicht verworfen wird, gemäß der Anzahl von REs und dem Szenario erfüllt ist, die Planungsinformationen gemäß dem aktuell ausgewählten PUSCH-Ressourcenparameter zu erzeugen.

**10.** Vorrichtung zum dynamischen Einstellen von PUSCH-Ressourcen, umfassend: einem Speicher (71), einem Prozessor (72) und einem Computerprogramm (73), das in dem Speicher gespeichert und durch den Prozessor (72) ausführbar ist, wobei der Prozessor (72) das Verfahren zum dynamischen Einstellen von PUSCH-Ressourcen gemäß einem der Ansprüche 1 bis 8 implementiert, wenn er das Computerprogramm (73) ausführt.

11. Computerlesbares Speichermedium, das computerausführbare Anweisungen zur Durchführung des Verfahrens zur dynamischen Anpassung der PUSCH-Ressource nach einem der Ansprüche 1 bis 8 speichert.

**Revendications**

1. Procédé d'ajustement dynamique des ressources du canal physique partagé de liaison montante (PUSCH) comprenant les étapes suivantes :

   déterminer (201) un scénario pour la transmission d'informations de contrôle de liaison montante (UCI) par un PUSCH, le scénario comprenant au moins l'une des options suivantes : transmettre des données de service et des UCI par le PUSCH, et transmettre uniquement des UCI par le PUSCH ;
   sélectionner (202), en fonction du scénario, un groupe de paramètres de ressources PUSCH parmi une pluralité de groupes de paramètres de ressources PUSCH, qui ne rejettent pas les UCI, pour générer des informations de programmation ; et
   transmettre (203) les informations de programmation à l'équipement utilisateur (UE) ;

   l'étape (202) consistant à sélectionner, selon le scénario, un groupe de paramètres de ressources PUSCH parmi la pluralité de groupes de paramètres de ressources PUSCH, qui ne rejettent pas d'UCI, pour générer des informations de programmation comprend :

   sélectionner (401) le groupe de paramètres de ressources PUSCH parmi la pluralité de groupes de paramètres de ressources PUSCH selon une séquence prédéfinie ;
   déterminer (402) le nombre d'éléments de ressource (RE) nécessaires pour transmettre les UCI en fonction du scénario et du paramètre de ressource PUSCH actuellement sélectionné ; et
   lorsqu'il est déterminé, en fonction du nombre de RE et du scénario, qu'une condition prédéfinie, selon laquelle l'UCI n'est pas rejeté, est satisfaite, générer (403) les informations de programmation en fonction du paramètre de ressource PUSCH actuellement sélectionné.

2. Procédé selon la revendication 1, dans lequel avant l'étape (201) de déterminer le scénario pout la transmission de l'UCI par le PUSCH, le procédé comprend en outre :
   configurer (301) les groupes de paramètres de ressources PUSCH en fonction d'une classification par taux de codage du multiplexage de l'UCI vers le PUSCH.

3. Procédé selon la revendication 2, dans lequel l'étape (301) de configurer les groupes de paramètres de ressources PUSCH en fonction de la classification taux de codage du multiplexage de l'UCI vers le PUSCH comprend :
   configurer deux à quatre groupes de paramètres de ressources PUSCH de manière graduelle en fonction d'une séquence de taux de codage allant de faible à élevé.

4. Procédé selon l'une quelconque des revendications 1 à 3, dans lequel les paramètres de ressources PUSCH comprennent :

   un HARQ-ACK (Hybrid Automatic Repeat Request-Acknownowledgement), décalé de $\beta_{offset}^{HARQ-ACK}$, un CSI-1 (Channel Status Information Part 1), décalé de $\beta_{offset}^{CSI-1}$, et un CSI-2 (Channel Status Information Part 2), décalé de $\beta_{offset}^{CSI-2}$.

5. Procédé selon la revendication 1, dans lequel lorsqu'aucun des paramètres de ressources PUSCH de la pluralité de groupes de paramètres de ressources PUSCH ne satisfait pas à la condition prédéfinie, le procédé comprend en outre :
   sélectionner un groupe de paramètres de ressources PUSCH les plus proches de la condition prédéfinie pour générer les informations de programmation.

6. Procédé selon la revendication 1 ou 5, dans lequel, dans le scénario où les données de service et l'UCI sont envoyés par le PUSCH, le nombre de RE requis pour l'UCI comprend le nombre $Q'_{ACK}$ de RE requis pour que le canal PUSCH transmette l'ACK et le nombre $Q'_{CSI-1}$ de RE requis pour que le PUSCH transmette le CSI-1, et la condition prédéfinie comprend une première condition prédéfinie :

$$\left\lceil (O_{CSI-2} + L_{CSI-2}) * \beta_{offset}^{PUSCH} * \sum_{l=0}^{N_{symbol}^{PUSCH}-1} M_{sc}^{UCI}(l) / \sum_{r=0}^{C_{UL-SCH}-1} K_r \right\rceil$$ est inférieur ou égal à

$$\left\lceil \alpha * \sum_{l=0}^{N_{symbol}^{PUSCH}-1} M_{SC}^{UCI}(l) \right\rceil - Q_{ACK}^{`} - Q_{CSI-1}^{`}$$ ,

où $O_{CSI-2}$ représente le nombre de bits occupés par le CSI-2, $L_{CSI-2}$ représente le nombre de bits de contrôle de redondance cyclique (CRC) occupés par le CSI-2, $\beta_{offset}^{PUSCH} = \beta_{offset}^{CSI-2}$ $\beta_{offset}^{CSI-2}$ représente un décalage du CSI-2, $M_{sc}^{UCI}(l)$ représente le nombre de RE que le symbole $l$ dans le PUSCH peut être utilisé pour transmettre l'UCI, $N_{Symbol}^{PUSCH}$ représente un nombre total de symboles occupés par le PUSCH, $C_{UL-SCH}$ représente le nombre de blocs de code pour la transmission du PUSCH, $K_r$ représente la taille du bloc de transport de chaque bloc de code, $\alpha$ représente une mise à l'échelle prédéfinie, $Q_{ACK}^{`}$ représente le nombre de RE nécessaires pour que le canal PUSCH transmette l'ACK, et $Q_{CSI-1}^{`}$ représente le nombre de RE nécessaires pour que le canal PUSCH transmette l'ICS-1.

7. Procédé selon la revendication 1 ou 5, dans lequel, dans le scénario où seul l'UCI est envoyé par le PUSCH, le nombre de RE requis pour l'UCI comprend : le nombre $Q_{CSI-2}^{`}$ de RE requis pour que le canal PUSCH transmette le CSI-2, et les conditions prédéfinies comprennent une deuxième condition prédéfinie :

un taux de codage $R_{CSI-2}$ de CSI-2 est inférieur ou égal à $c_T$ ,

où $R_{CSI-2} = ( O_{CSI-2} + L_{CSI-2} ) / Q_{CSI-2}^{`}$ , et $c_T = \dfrac{R}{\beta_{offset}^{CSI-2}}$ , et

où $Q_{CSI-2}^{`}$ représente le nombre de RE nécessaires pour que le PUSCH transmettele CSI-2, $O_{CSI-2}$ représente le nombre de bits occupés par le CSI-2, $L_{CSI-2}$ représente le nombre de bits CRC occupés par le CSI-2, $\beta_{offset}^{CSI-2}$ représente un décalage du CSI-2, et R est un taux de codage du PUSCH.

8. Procédé selon la revendication 1, dans lequel les informations de programmation comprennent un indice de ressource d'indicateur de décalage et l'étape (203) de transmettre les informations de programmation à l'UE comprend : transmettre les informations de programmation à l'UE par l'intermédiaire de l'indication de contrôle de la liaison descendante (DCI), qui contient l'indice de ressource de l'indicateur de décalage.

9. Dispositif permettant d'ajuster dynamiquement la ressource PUSCH, comprenant :

un module de détermination (61), configuré pour déterminer un scénario de transmettre des informations de contrôle de liaison montante (UCI) par un PUSCH, dans lequel le scénario comprend au moins l'un des opérations suivants : transmettre des données de service et d'UCI par le PUSCH, et transmettre uniquement d'UCI par le PUSCH ;
un module de sélection (62), configuré pour sélectionner, selon le scénario, un groupe de paramètres de ressources PUSCH parmi une pluralité de groupes de paramètres de ressources PUSCH qui ne rejettent pas les UCI pour générer des informations de programmation ; et
un module de transmission (63), configuré pour transmettre les informations de programmation à un équipement d'utilisateur (UE) ;
dans lequel le module de sélection (62) est configuré pour :

sélectionner le groupe de paramètres de ressources PUSCH parmi la pluralité de groupes de paramètres de ressources PUSCH selon une séquence prédéfinie ;

déterminer le nombre d'éléments de ressource, REs, nécessaires pour la transmission de l'UCI en fonction du scénario et du paramètre de ressource PUSCH actuellement sélectionné ; et

lorsqu'il est déterminé qu'une condition prédéfinie selon laquelle l'UCI n'est pas rejeté est satisfaite en fonction du nombre de RE et du scénario, générer les informations de programmation en fonction du paramètre de ressource PUSCH actuellement sélectionné.

10. Appareil pour ajuster dynamiquement la ressource PUSCH, comprenant : une mémoire (71), un processeur (72) et un programme informatique (73) stocké dans la mémoire et exécutable par le processeur (72), dans lequel le processeur (72) met en oeuvre le procédé pour ajuster dynamiquement la ressource PUSCH selon l'une quelconque des revendications 1 à 8 lors de l'exécution du programme informatique (73).

11. Support de stockage lisible par ordinateur stockant des instructions exécutables par ordinateur pour la mise en oeuvre du procédé pour ajuster dynamiquement la ressource PUSCH de l'une quelconque des revendications 1 à 8.

11

12

| Network-side apparatus | ←→ | Terminal-side apparatus |

FIG. 1

201

Determine scenario for transmitting UCI over PUSCH

202

Preferentially select, according to scenario, from multiple sets of PUSCH resource parameters, a set of PUSCH resource parameters in which UCI is not discarded, to generate scheduling information

203

Send scheduling information to UE

FIG. 2

301

| Configure sets of PUSCH resource parameters in a grading manner, according to a code rate of multiplexing UCI to PUSCH |
|---|

201

| Determine scenario for transmitting UCI over PUSCH |
|---|

202

| Preferentially select, according to scenario, from multiple sets of PUSCH resource parameters, a set of PUSCH resource parameters in which UCI is not discarded, to generate scheduling information |
|---|

203

| Send scheduling information to UE |
|---|

FIG. 3

401

Select a set of PUSCH resource parameters from the muliple sets of PUSCH resource parameters according to preset sequence

402

Determine number of REs required for transmitting UCI according to scenario and currently selected PUSCH resource parameter

403

When it is determined that preset condition where UCI is not discarded is satisfied according to number of REs and scenario, generate scheduling information according to currently selected PUSCH resource parameter

FIG. 4

```
                                          501
  ┌─────────────────────────┐   /
  │   Allocate PUSCH RB      │
  │   resource for the UE    │
  └─────────────────────────┘
              │                           502
              ▼                    /
  ┌─────────────────────────┐
  │  Select a set of PUSCH   │
  │   resource parameters    │
  └─────────────────────────┘
              │                           503
              ▼                    /
  ┌─────────────────────────┐
  │ Calculate number of REs  │
  │    required for UCI       │
  └─────────────────────────┘
              │                  504
              ▼           /
           ◇ Preset condition ◇   YES
           ◇   is met?      ◇ ──────────────┐
              │                              │
             NO              506             │
              ▼           /                  │                    505
           ◇ Is there resource ◇   NO        │             /
           ◇ parameter available? ◇ ────     ▼
              │                        ┌──────────────────────┐
             YES          507          │ Selection is successful │
              ▼      /                 └──────────────────────┘
  ┌─────────────────────────┐
  │  Select a set of PUSCH   │
  │ resource parameters closest │
  │    to preset condition   │
  └─────────────────────────┘
```

FIG. 5

33

Determination
module

61

Selection module

62

Sending module

63

FIG. 6

72

71

73

Processor

Computer
program

Memory

FIG. 7

**REFERENCES CITED IN THE DESCRIPTION**

**Non-patent literature cited in the description**

- **CATT.** Remaining details of UCI multiplexing on PUSCH. *3GPP R1-1801733,* 26 February 2018